Europäisches Patentamt

European Patent Office

Office européen des brevets

⑩

(11) Publication number: **0 181 937**
**B1**

(12) **EUROPEAN PATENT SPECIFICATION**

(45) Date of publication of patent specification: **05.12.90**

(21) Application number: **84903452.5**

(22) Date of filing: **17.09.84**

(86) International application number:
**PCT/JP84/00449**

(87) International publication number:
**WO 85/01383 28.03.85 Gazette 85/08**

(51) Int. Cl.⁵: **G 11 B 17/04**

(54) **APPARATUS FOR REPRODUCING RECORDED INFORMATION FROM RECORDING DISK.**

(30) Priority: **16.09.83 JP 171841/83**

(43) Date of publication of application:
**28.05.86 Bulletin 86/22**

(45) Publication of the grant of the patent:
**05.12.90 Bulletin 90/49**

(84) Designated Contracting States:
**DE FR GB**

(56) References cited:
**FR-A-2 488 718**
**GB-A-2 103 863**
**JP-A- 586 550**
**JP-A-5 552 559**
**JP-A-5 845 657**
**JP-A-57 205 853**
**JP-U-5 869 365**

(73) Proprietor: **MATSUSHITA ELECTRIC INDUSTRIAL CO., LTD.**
**1006, Oaza Kadoma**
**Kadoma-shi, Osaka-fu, 571 (JP)**

(72) Inventor: **KAWAMURA, Ichiro**
**1-8-15, Yamasaka Higashisumiyoshi-ku, Osaka-shi**
**Osaka-fu 546 (JP)**
Inventor: **FUJIOKA, Yoshitaka**
**4-7, Kumata 5-chome Higashisumiyoshi-ku, Osaka-shi**
**Osaka-fu 546 (JP)**
Inventor: **FUJITA, Makoto**
**2-1-405, Higashiizumigaoka 1-chome Toyonaka-shi**
**Osaka-fu 560 (JP)**

(74) Representative: **Crawford, Andrew Birkby et al**
**A.A. THORNTON & CO. Northumberland House**
**303-306 High Holborn**
**London WC1V 7LE (GB)**

EP 0 181 937 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

The present invention relates to a recording disc reproducing device, wherein after a record case containing a recording medium (a record) in the shape of a disc is inserted to a predetermined position in the body of said device, said record is placed automatically on the turntable provided in said device by pulling out said record case, and when recovering said record an empty record case is inserted into the body of said device to thereby automatically recover said record case on the turntable.

Background of the invention

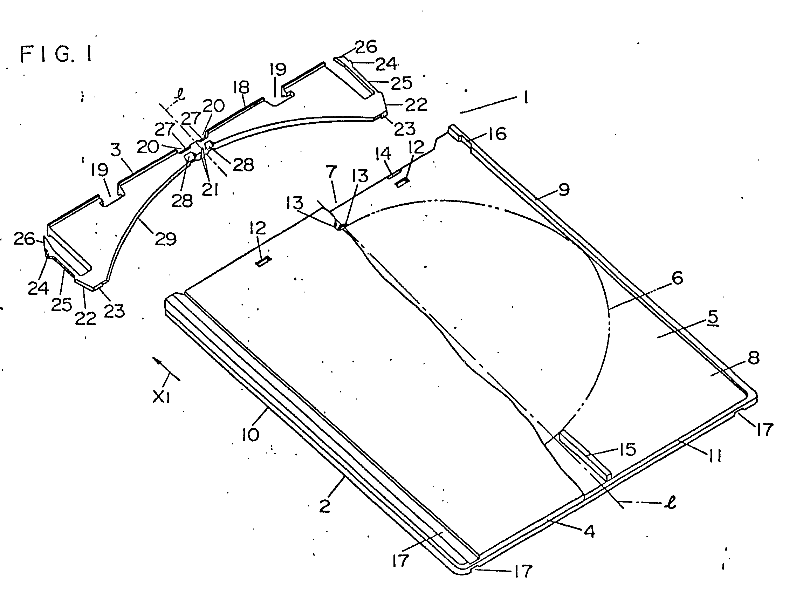

Fig. 1 through Fig. 3 show the structures of the record case which can be used for the recording disc reproducing device according to the present invention, wherein a record case 1 in the shape of a rectangle is composed of a record case body 2 (hereinafter referred to as the case) and a cover 3 to be detachably combined with the opening 7 provided at the front side of the inserting direction $X_1$ toward the device of the case 2. The case 2 and the cover 3 are formed for example from styrol resin.

The case 2 is formed by a pair of half bodies 4 which are molded by the same die and pasted together, the inside of which is provided with the record holding space 5 (whose height is a little greater than the thickness of the record 6) which is flat over its entire width and length, and the record 6 (a recording medium) is held in this space 5. This space 5 has the opening 7 on the side of the inserting direction $X_1$ and the sides of the remaining three directions are blocked.

Further, the same components of the case 2 are so disposed as to be positioned at right and left sides with respect to the centerline I as the center in the inserting direction.

Each of the half body 4 consists of the plate 8 having the recessions 17 at right and left sides which play the role respectively such as of the hinge when expanded to open and the ribs 9, 10, 11 provided along the three edges of this plate. With respect to the lower half body 4 shown in Fig. 1, the windows 12 with which the opening arms described later engage are formed at right and left in the neighbourhood on the side of the opening 7 and the holes 13 with which the bosses of the cover described later engage are formed at the central portion in the neighbourhood of the opening 7. A pair of tapers 14 are formed symmetrically on the edges of the opening 7. Such tapers are for guiding the insertion of the arms of the latching mechanisms described later. At the inner portion the stoppers 15 to which the disc 6 butts are formed at the positions deviated toward right and left from the centerline I.

Furthermore, on the inside in the neighbourhood of the opening of the ribs 9, 10 are provided the recessions 16 with which the bosses of the cover 3 described later engage. The half bodies 4 formed as such are bonded with the entire or a part of the periphery of the ribs 9, 10, 11.

At the end of the cover 3, the flange 18 is provided to close the opening 7 of the case 2 when the cover 3 is engaged and secured with the case 2, the notches 19 into which the opening arms described later can enter, the slopes 27 which guide the disc holding arm in the reproducing device described later, and the guide grooves 20 having the thin portions 28 which are thinner than the glue guard of the record 6 are formed symmetrically to the centerline I on both faces, and on the centerline I on both faces are formed the bosses 21 which engage with the holes 13 of said case 2. Furthermore, the slopes 22 and the tapers 23 which guide the cover 3 as it enters the case 2 are provided, the protuberances 24 which engage with said recessions 16 to thereby fix the cover 3 to the case 2 are provided with the arms 25 which utilize the flexibility of resin, at the points of which are provided the slopes 26 which engage with the releasing members of the cover 3.

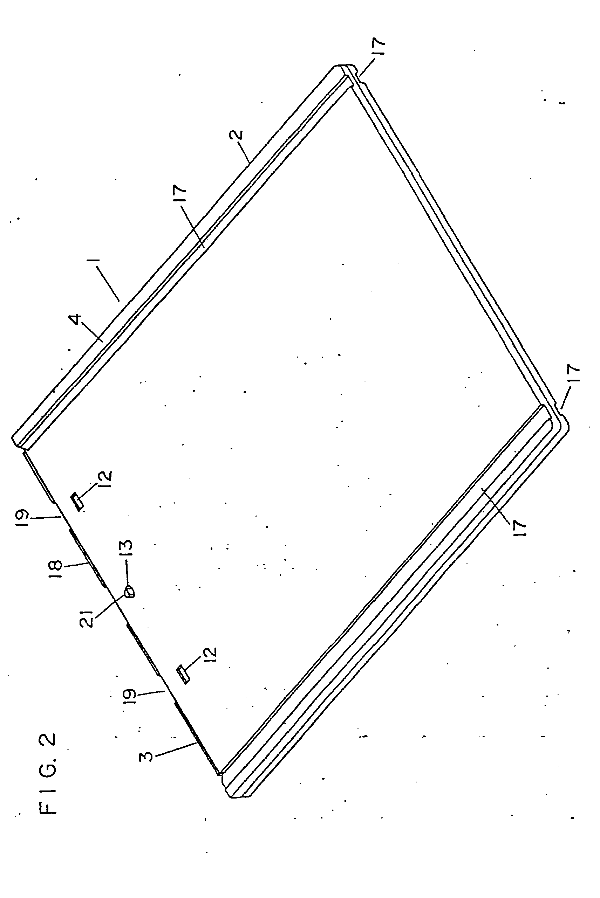

Fig. 2 shows the conditions of the record 6 and cover 3 as assembled into the case 2. Such conditions are illustrated with respect to Fig. 1, wherein the record 6 butts against the stoppers 15 to be secured in the direction of depth and secured as well by the ribs 9, 10 in the direction of width.

The cover 3 closes the opening 7 and is joined together therewith by the protuberances 24 engaging with the recessions 16 and by the bosses 21 engaging with the holes 13.

By such movements the record 6 is controlled by the circular arcs 29 of the cover 3 with respect to the inserting direction $X_1$ as well, so that the record 6 is held in the case 2 without falling off therefrom. Furthermore, the thickness of the portion of the cover 3 entering the case 2 is almost the same as the thickness of the disc holding space 5 of the case 2 and the record 6 will not therefore fall off from the clearance thereof.

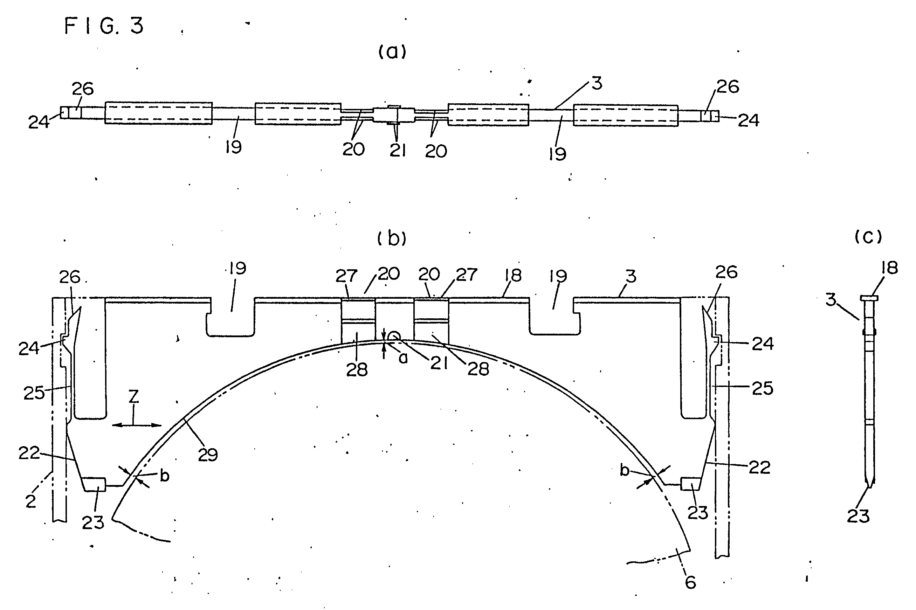

Fig. 3 is a detail view of portions of the cover 3, wherein the shape opposing the record 6 is formed by the circular arc by for example providing the greater clearances 'b' at both ends as compared with the clearances 'a' at the central portion. This is so arranged as to operate stably the cover 3 and the record 6 even if their relative positions are deviated more or less in the directions Z shown by the arrows.

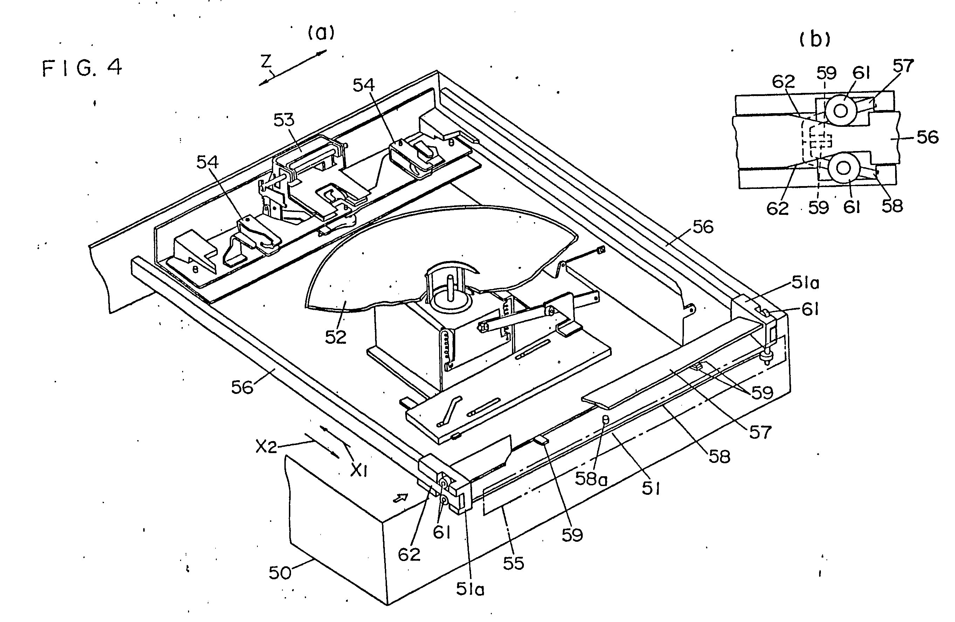

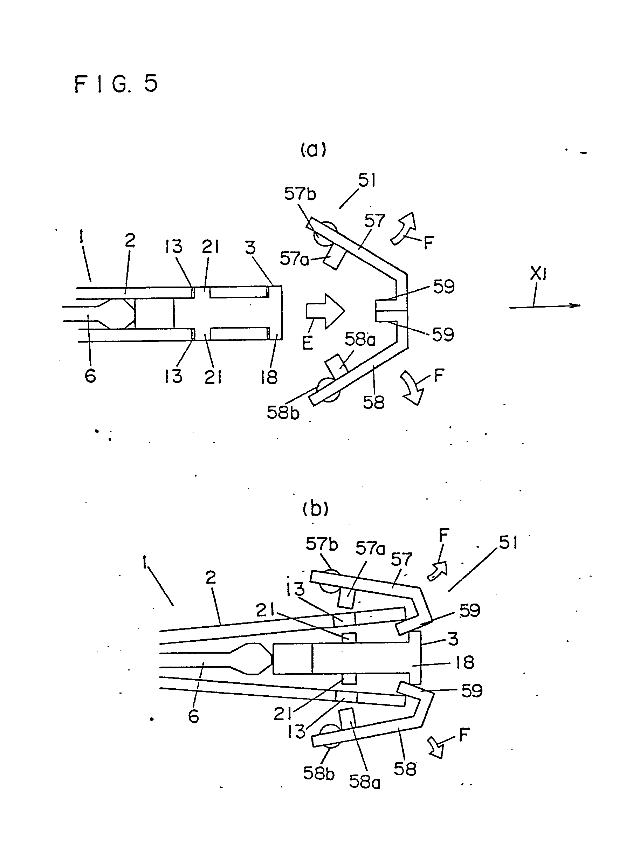

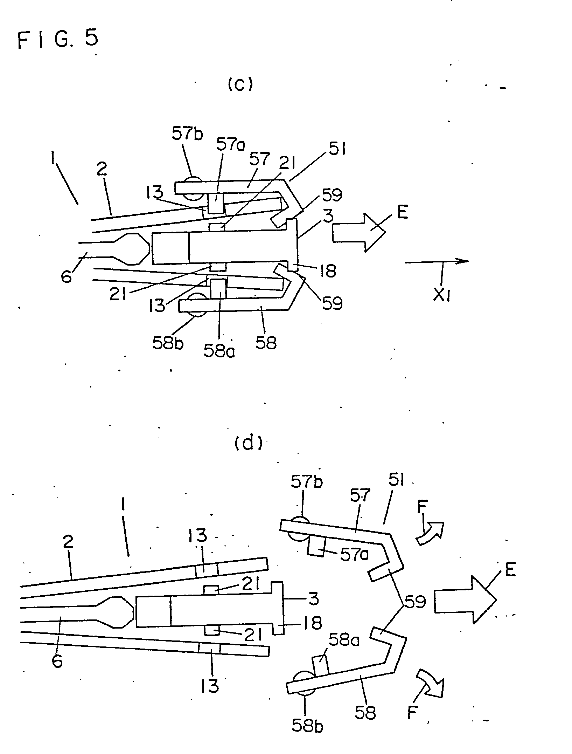

Fig. 4 is a schematic illustration of an example of the conventional recording disc reproducing device which uses the cassette case as mentioned above. This reproducing device 50 has such mechanisms as the opening mechanism 51 which expands to open the opening 7 of the case 2, the turntable 52 on which the record 6 is placed, the mechanism 53 which holds the record 6 and the mechanisms 54 which latch the cover 3. The opening mechanism 51 of the case 2 is located in the neighbourhood of the record case inserting slot 55 of the reproducing device 50 and both sides of the opening mechanism 51 are guided by the guide rails 56 to move reversibly in the directions of $X_1$ and $X_2$ shown by the arrows. This opening mechanism 51 consists of the upper beam 57 and the lower beam 58 which extend in the direction of width of the reproducing device 50, each beam 57 and 58 are provided to move rotatably on the moving body 51a which slides over said guide rails 56, by means of the rotating fulcrums 57b, 58b (refer to Fig. 5), and has the protuberances 57a, 58a formed so as to engage with a pair of opening arms 59 and the holes 13 of the case. Each beam 57, 58, when located in the neighbourhood of the record case inserting slot 55, is slanted so as to cause the opening arms 59. of both beams 57, 58 to be fitted together by the action of the coil spring and the like.

As the opening mechanism 51 moves into the direction of $X_1$ shown by the arrow and the rollers 61 provided freely rotatably with the beams 57 and 58 ride onto the tapers 62 formed at the end of the guide rails 56, the beams 57, 58 respectively rotate so as to be horizontal to thereby move rotatably in the direction wherein the opening arms separate in the vertical direction from each other.

In the construction as described above, when the record case 1 is inserted into the reproducing device 50 through the slot 55 with the cover 3 facing the front, the opening arms which are closed enter the notches 19 of the cover 3, and the case opening mechanism 51 is pushed by the inserting motion of the cartridge to thereby move in the direction of the arrow $X_1$.

Furthermore, the opening arms 59 are ensured to enter the case 2 by the action of the tapers 14 provided with the opening 7 of the case 2. At this time, the tips of the opening arms 59 are positioned respectively corresponding to the windows 12 of the case 2. When the case opening mechanism 51 is moved, the opening arms 59 move to rotate into the direction wherein they open each other, the case 2 is pushed to expand by the engagement of the protuberances 57a, 58a with the holes 13 to thereby expand to open the case 2. Hereafter, the case 2 is inserted into the direction of the arrow $X_1$ as held in expanded and opened condition. Here, since the case 2 is provided with the recessions 17 as mentioned above, expanding and opening actions of the above are interlocked with the inserting motion with relatively light force. Since the protuberances 24 of said cover 3 are engaged with the recessions 16 of the case 2 under this condition as well, the cover 3 moves together with the case 2 and it will not happen that only the cover 3 is left halfway in the reproducing device 50 even if the case is pulled out halfway. Furthermore, structures and motions of the turntable 52, holding mechanism 53, cover latching mechanisms 54 as well as those of other mechanisms are the same such for example as those of the prior art stated in the laid open patent No. 57-205853.

However, in the opening mechanism 51 of said prior art, there is a problem of the following, i.e., a ∾ b of Fig. 5 illustrate the motions of the opening mechanism 51 in relation to the record case 1 while the motions of the opening mechanism 51 are as described above. Therefore, explanations will be given in stages so as to clarify problems which occur specifically in the example of the prior art.

Fig. 5a is illustrative of the condition of the case 2 before it butts against the opening mechanism 51. From this condition, the case 2 butts against the opening mechanism 51 are shown by the arrow E, the beams 57, 58 move to rotate in the direction of the arrow F by the action of the tapers 62 (refer to Fig. 4) to thereby expand to open the case.

Fig. 5b shows the condition of the case 2 being expanded to open, i.e., this is the condition wherein the rollers 61 are on the midway of the tapers 62 in Fig. 4. In this condition, the protuberances 57a, 58a are not yet engaged with the holes 13 of the case 2. However, since the rollers 61 are on the midway of the tapers 62, the rollers 61 can be returned to the condition of a by the action of said coil spring and the like.

Expansion and opening of the case 2 proceed further, which are shown in Fig. c as the completely expanded and opened condition. Under such condition, the protuberances 57a, 58a are now engaged with the holes 13 of the case 2.

Under the normal using conditions on the part of users, the opening mechanism 51 operates as shown in (a), (b), (c) of Fig. 5 above. Furthermore, as the case is being taken out, the opening mechanism 51 operates completely reversely in order of motions shown in (c) to (b) to (a) of Fig. 5. However, cases may be that users put in and take out the record case 1 at an abnormally fast speed and the opening mechanism 51 is shaked in the neighbourhood of the slot 55 causing the opening mechanism 51 to operate in such order as (a) to (b) to (c) or (c) to (b) to (a). Under such operation, because the opening mechanism 51 has inertia to some extent, the opening mechanism 51 alone runs into the direction of the arrow E by the impact given by the case 2 as it butts against the opening mechanism 51, the holes 13 of the case 2 are not engaged completely with the protuberances 57a, 58a as shown in Fig. 5c but are in the condition shown in Fig. 5d. In other words, in spite of the case being in the neighbourhood of the slot 55, the opening mechanism 51 will be positioned inside the reproducing device 50.

If the operation is under such condition, the rollers 61 have completely ridden on the tapers 62 and it is impossible for the opening mechanism 51 to return to the neighbourhood of the slot 55 by the force of said coil spring and the like.

Under such condition, it is also impossible to insert the case 2 over again to thereby cause the opening mechanism 51 to normally operate while the reproducing device 50 must be overhauled and repaired so as to put the opening mechanism 51 back into the normal conditions. Namely, should abnormal conditions such as above occur once, the normal conditions cannot be resumed by the users thereby making it impossible to reproduce the record. Of course, such abnormal conditions do not necessarily occur frequently, but they are the problems which must be solved without fail in order to improve the reliability because such conditions can result in considerable trouble should they happen once.

A disc player according to the first portion of claim 1 with lockable means for enlarging the opening of an inserted disc jacket is disclosed in FR-A-2,488,718, wherein jacketed record discs are loaded through an entrance slot and the jacket opening is enlarged during insertion to facilitate withdrawal of this disc includes means for locking the enlarging device in a closed portion at the entrance slot thereby to prevent the insertion of fingers etc. The enlarging device comprises upper and lower members 61, 62 which carry fingers (61b,c; 62b,c) which enter the opening of an inserted jacket. The members 61, 62 are pivoted 67a, 68a at their ends to slides 65(66) slidable in the insertion direction along rails 63 (64). The members 61, 62 have rollers 70, 71 engaging the rails and are made to pivot apart by diverging portions 63a on the rails. The locking means comprises pivoted latch levers 75 (76) at each side. Initially under spring bias 79 a portion 75d of each lever engages in a recess 63b in the rail to prevent movement therealong, and the lever portions 75e, f prevent members 61, 62 being pushed apart. The leading edge of an inserted jacket 10 engages lever portion 75g causing the levers to pivot to a position wherein portions 75d, e, f are disengaged.

Disclosure of the invention

It is among the objects of the present invention to solve such problems to thereby enhance the reliability of the reproducing device. To materialize such objects, the present invention provides a recording disc reproducing device for use with a disc case having a flat rectangular box shaped case body with an opening at one end thereof, the interior of the case body being sized for holding a disc-like recording medium and the case body having an engaging hole located near the opening of the case body, the disc case further including a cover removably received in the opening of the case body, the recording disc reproducing device comprising:

a housing having a front side with an elongated disc case inserting slot therein through which the disc case is inserted;

holding means, disposed at a rear part of the reproducing device, for holding the disc-like recording medium within the reproducing device after a disc case has been inserted into and withdrawn from the reproducing device;

turntable means, positioned between said inserting slot and a rear part of the reproducing device, for rotating the disc-like recording medium;

a rail disposed in said housing extending in a longitudinal direction along which a disc-like recording medium is inserted into and removed from the reproducing device;

a base slidably supported on said rail from a first position near said inserting slot to a second position along said longitudinal direction towards the rear part of the reproducing device;

an opening means disposed on said base for expanding the opening of a disc case which is inserted through said disc case inserting slot;

an engaging means disposed on said base for removably engaging with the engaging hole of a disc case which is inserted through said inserting slot to thereby secure the disc case with respect to said base;

a slide controlling means disposed between said base and said rail for either preventing or allowing said base to slide along said rail; and

characterised by further comprising a coupling means, operatively connected to said engaging means and said slide controlling means, for causing said slide controlling means to prevent said base from sliding along said rail except when said engaging means is engaged with the engaging hole of a disc case which has been inserted through said disc case inserting slot, and in that the opening means (215) is only operable when the engaging means has engaged a disc case.

Brief description of the drawings

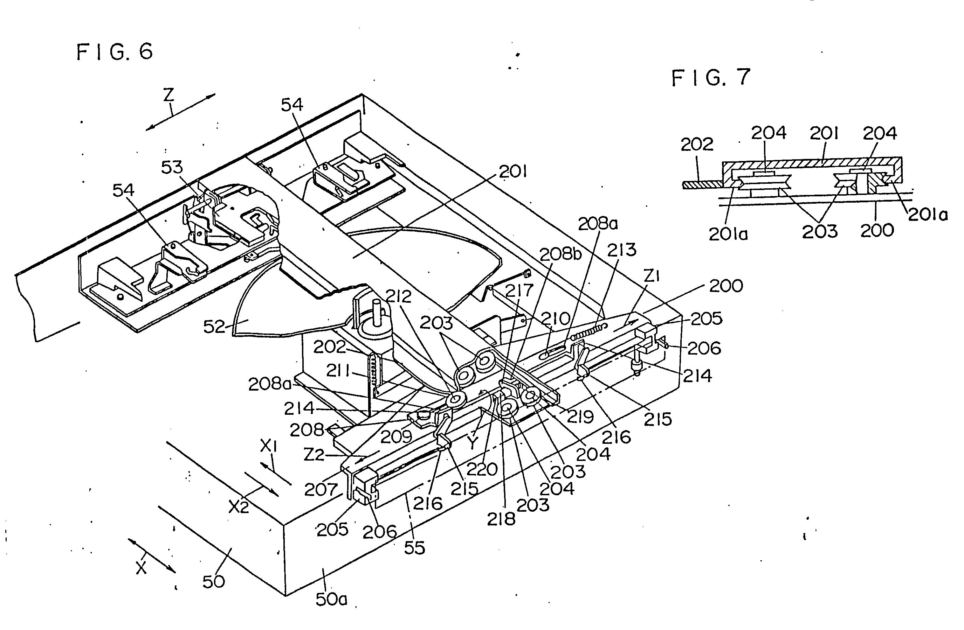

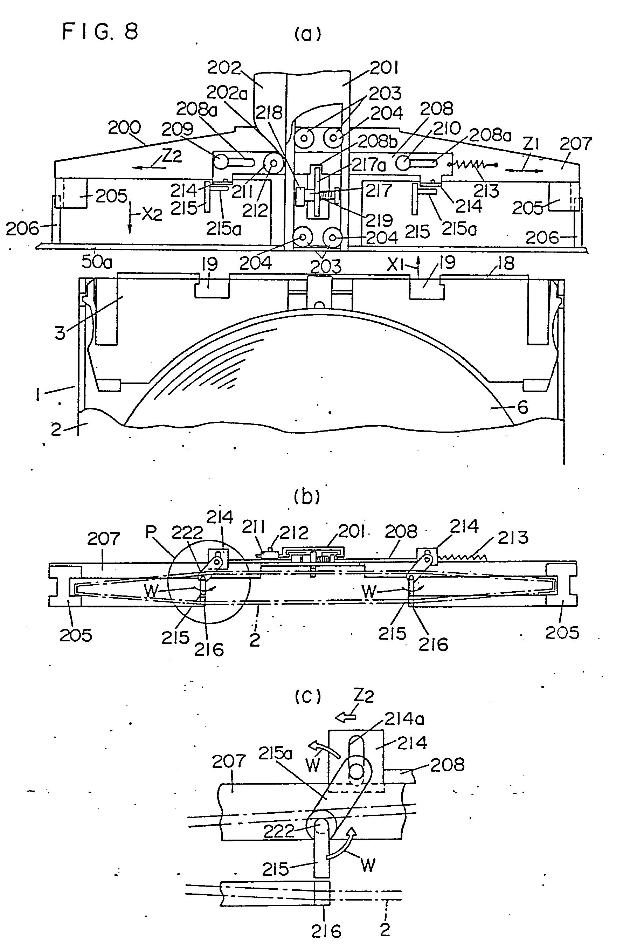

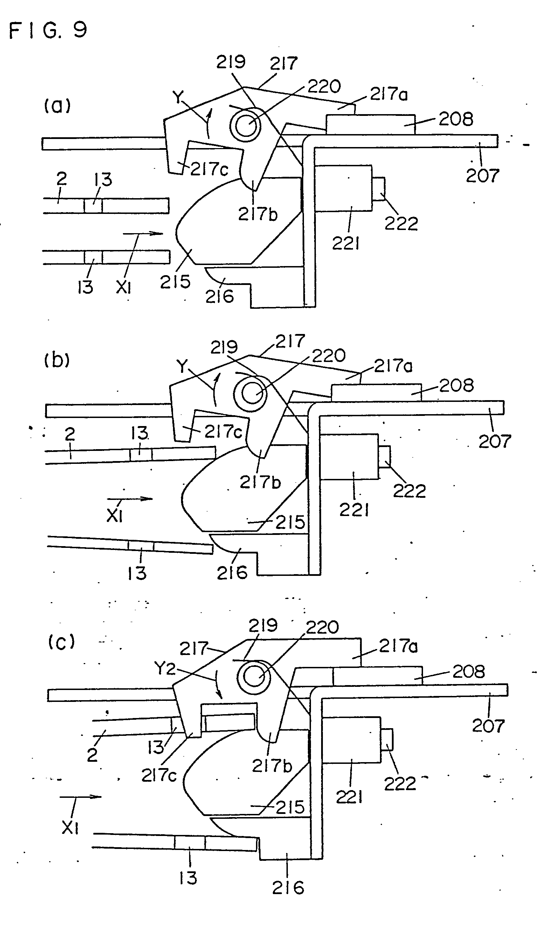

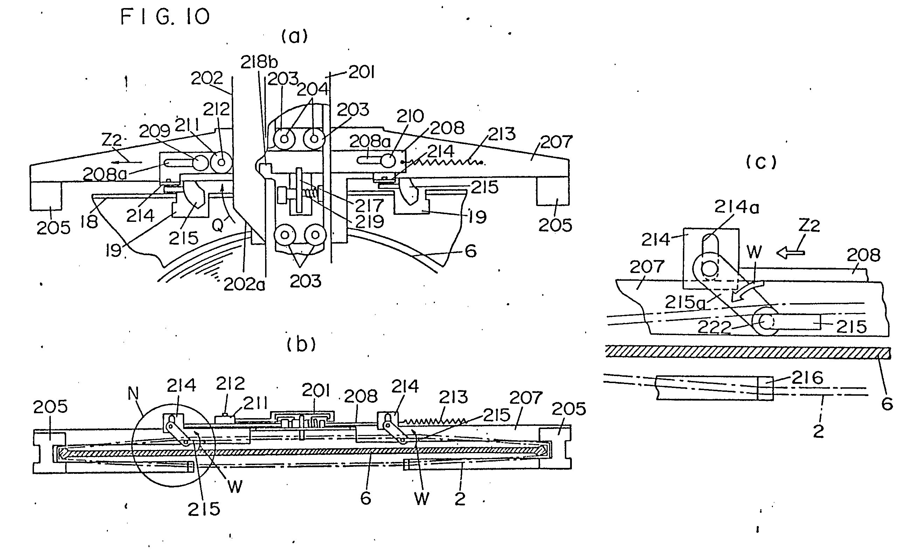

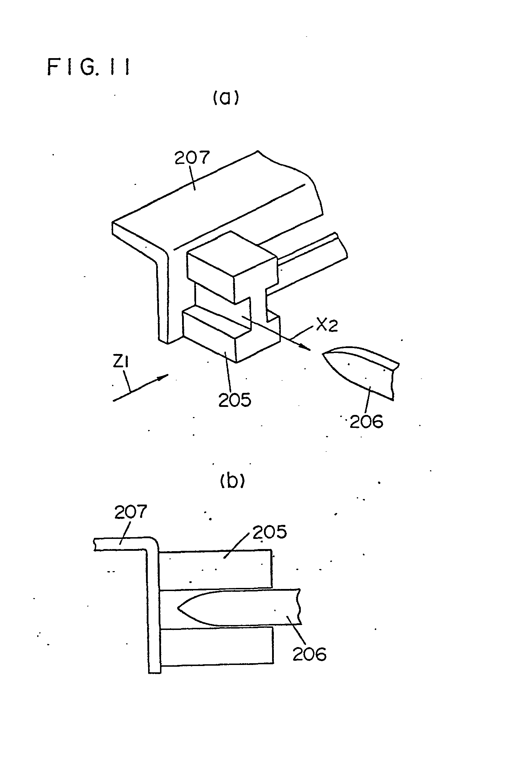

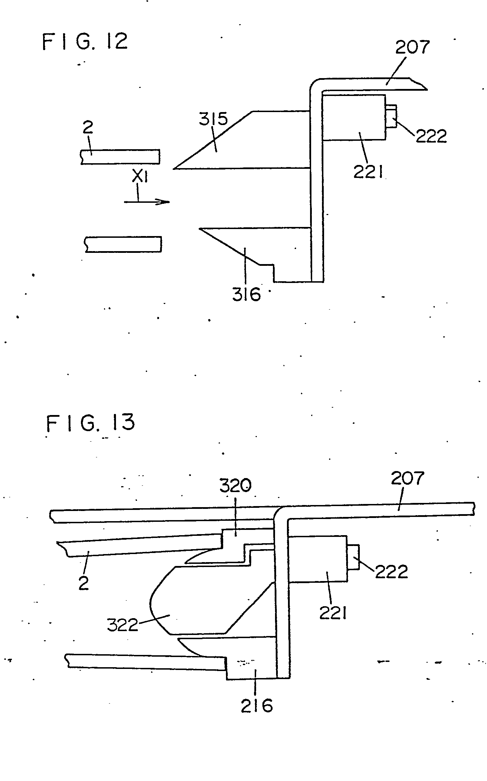

Fig. 1 is a partly sectional perspective illustration showing an example of the record case used in the present invention, Fig. 2 is a perspective illustration showing the holding condition of the same record, a, b, c of Fig. 3 are the front view, plan view and side view of the cover of the same record case respectively, a of Fig. 4 is a partly sectional perspective illustration showing the structure of the recording disc reproducing device of the prior art and b of Fig. 4 is a sectional side elevation of main parts, Fig. 6 is a partly sectional perspective illustration showing the structure of the recording disc reproducing device according to the present invention, Fig. 7 is a section view of main parts of Fig. 6, a of Fig. 8 is a top view of the reproducing device showing the motion of the opening mechanism, c of Fig. 8 is a front view of the same opening mechanism, and c of Fig. 8 is an enlarged front view of main parts of the same opening mechanism, a, b, c of Fig. 9 are transverse sectional views illustrative of the motion of the opening member and the latch during the case insertion, a of Fig. 10 is a plan view showing the expanded and opened condition of the case, b of Fig. 10 is the front view of the same case, and c of Fig. 10 is an enlarged front view of main parts of the same case, a of Fig. 11 is a perspective illustration showing the engagement of the holding member with the member to be held, b of Fig. 11 is a side view of the same engagement, Fig. 12 is a side view showing other embodiment of the opening mechanism, and Fig. 13 is a side view of another embodiment showing the opening mechanism.

Best mode to implement the invention

Fig. 6 through Fig. 8 show the fundamental structures of the embodiments of the recording disc reproducing device according to the present invention. Fig. 6 shows the embodiments which combine the opening mechanism 200 according to the present invention instead of the opening mechanism 51 of the prior art, with respect to the reproducing device 50 of said prior art.

The opening mechanism 200 is composed so as to move along the rail 201 which is fixed on the upper part of the turntable 52 of the reproducing device 50. 202 is the cam plate fixed on the side of the rail 201. 203 are the rollers which roll along the rail, and are supported rotatably by the pins 204.

205 are the guiding members as the members to be held which are fixed on both sides of the base 207, function to guide both sides of the case 2, simultaneously engage with the members 206 in the shape of wedge used as the holding members which are fixed to the front panel 50a of the reproducing device 50, and perform to restrict the opening mechanism 200 from moving in the vertical directions as shown in a of Fig. 8 when the opening mechanism 200 is in the neighbourhood of the slot 55.

208 is a slide plate which is supported slidably on the base 207 only in the directions of $Z_1$, $Z_2$ shown in illustrations by means of the pins 209, 210 fitted into the base 207 and the slot 208a. 211 is the roller which can be butted against the cam plate 202, and is supported rotatably on the slide plate 208 by means of the pin 212. 213 is the coil spring arranged between the base 207 and the slide plate 208 and provides a force with the slide plate 208 in the direction of $Z_1$ in the illustration. 214 are the engaging members composed to cause the opening members 215 to interlock with the slide plate 208, and are secured to the slide plate 208. The opening members 215 are supported to move rotatably on the base 207. 216 are supporting members which are secured to the base 207. 217 is the latch which engages with the hole 13 of the case 2, and is supported on the base 207 to move rotatably as shown by the arrow Y in the illustration, by means of the bearing 218 and the pin 220. Further, the latch 217 is provided with a force in the direction of the arrow Y by means of the spring 219.

Fig. 7 shows the structures of the opening mechanism 200 and the rail 201. The section of the rail 201 is formed into the shape of the letter C as shown in the illustration. This shape can be easily produced for example by the aluminum extrusion. The rollers 203 have V grooves formed on its outer periphery as shown so that these grooves fit the guiding parts 201a of the rail 201 to thereby permit rollers 203 to roll.

Four rollers 203 are guided respectively in such manner and are disposed as shown in Fig. 6, therefore, it is possible that the opening mechanism 200 is capable to guide the movement of the case 2 from the front to the rear, under the stable-condition, in the direction of X of the reproducing device 50.

Above description gives the general structures of the reproducing device according to the present invention, and the explanation will hereafter be focused on the motions of the opening device 200.

a, b, c of Fig. 8 are perspectively illustrative of the motions of the opening mechanism 200 as seen from the top and front of the reproducing device respectively. These illustrations represent the conditions of the case 2 before it is inserted into the reproducing device 50. c is an enlarged view of the portion P shown in b. Because the slide plate 208 is given a force in the direction of $Z_1$ by means of the coil spring 213, the roller fitted to the slide plate 208 is also provided with a force in the direction of $Z_1$. And, by the action of the slope of the cam plate 202, the whole opening mechanism 200 is moved into the direction of $X_2$ to be pushed against the front plate 50a. If the opening mechanism 200 should be pushed into the direction of $X_1$ in Fig. 8 by some force or other under such condition, the slide plate 208 cannot move into the direction $Z_2$ in Fig. 8 because the end 217a of the latch 217 and the notch 208b provided with the slide plate 208 are engaged.

Therefore, there is no possibility that the roller 211 rolls up the slope 202a causing the opening mechanism 200 to move into the direction of $X_1$. With respect to the opening mechanism 200 under such condition, the record case 1 containing the record 6 or the empty record case 1 will be inserted. In the illustration is shown the record case 1 holding the record 6, with the part of the record case 1 being cut out. When the record case 1 is inserted into the direction of $X_1$ under such condition, the record case 1 is guided by the guiding members 205 to thereby butt against the opening members 215. Further, the opening members 215 are provided at positions respectively corresponding to the notches 19 of the cover 3, therefore, there is no possibility that the cover 3 interferes with the opening members 215. As shown in c of Fig. 8, the opening members 215 are engaged with the slots 214a drilled into the engaging members 214, by means of the arm sections 215a. When the slide plate 208 is slided into the direction of $Z_2$ shown in the illustration, the slide plate 208 is composed so as to move to rotate centering on the fulcrum 222 in the direction of W shown in illustration.

Now, the motion will be explained in connection with the opening members 215 and the latch 217 during the insertion of the record case 1. a, b, c of Fig. 9 are transverse sectional views of the opening mechanism 200 illustrating the motions of the opening members 215 and the latch 217 while the case 2 is being inserted.

For the convenience of easy understanding of the illustration, the record 6 and the cover 3 are not shown. As shown in a of Fig. 9, the latch 217 is held by the spring 219 in the direction of the arrow Y in the illustration. Under such condition, because the notch 208b of the slide plate 208 is engaged with the end 217a of the latch 217, the slide plate 208 cannot move into the direction of $Z_2$. The opening member 215 is combined with the supporting member 216 as shown so as to guide the case 2 and the side of the opening member 215 is formed into the shape of the shell to thereby permit to expand to open the case 2 easily. In the illustration, 221 is the bearing, 222 is the fulcrum fixed to the opening member 215, whereby the opening member 215 is so composed as to be able to move rotatably as mentioned above.

When the case 2 is pushed into such opening member 215 in the direction of $X_1$ to thereby butt, the case 2 is expanded to open along the slopes of the opening member 215 as shown in b of Fig. 9. As the case 2 further advances into the direction of $X_1$, the lower part of the case 2 moves from the opening mechanism 215 over to the supporting member 216 to be further expanded to open. As the case 2 advances furthermore into the direction of $X_1$, the end of the case 2 butts against the butted end 217b of the latch as shown in c of Fig. 9 and the latch 217 moves to rotate into the direction of $Y_2$ as shown the illustration At the same time the engaged end 217c of the latch 217 enters the hole 13 of the case 2 to thereby secure the case 2. Under such conditions, the case is expanded and opened as shown and supported by the opening member 215 and the supporting member 216.

The end 217a of the latch 217 and the notch 208b of the slide plate 208 are disengaged, so that the slide plate 208 can be slided into the direction of $Z_2$.

As the case 2 is pushed in further, now the slide plate 208 is made possible to slide into the direction of $Z_2$, permitting the roller 211 in Fig. 8 to roll up the slope 202a of the cam plate 202 and the opening mechanism 200 to move together with the case 2 in the direction of $X_1$. Under this condition, the movement of the slide plate 208 into the direction of $Z_2$ causes the latch 217 to be held with the end 217a by means of the slide plate 208 and maintained in the condition of c shown in Fig. 9. Therefore, there is no possibility that the engagement of the hole 13 of the case 2 with the engaged end 217c of the latch 217 is released. By such arrangement, when the record case 1 is inserted into the device 50, the case 2 can be moved inside the reproducing device 50 in a condition wherein the case 2 is being expanded and opened by the opening mechanism 200.

a of Fig. 10 is illustrative of a condition of the roller 211 as having climbed up the slope 202a in the direction of the arrow Q in the illustration. Under this condition, as the slide plate 208 slides into the direction of $Z_2$, the opening member 215 moves to rotate into the direction of W with the case 2 being expanded and opened thereby causing not to prevent the record 6 or the cover 3 from entering and coming out of the case 2. c of Fig. 10 is an enlarged view of the portion N of b.

When the record case 1 is being pulled out, the opening mechanism 200 operates completely reversely from the explanation of the above. In other words, the opening mechanism 200 being pulled by the case 2 moves into the direction of $X_2$, and as the roller 211 approaches the slope 202a the roller 211 rolls down the slope 202a by the force of the coil spring 213.

At the same time, the slide plate 208 slides into the direction of $Z_1$ to be returned into the condition shown in a of Fig. 8. By this, the latch 217 which is held in the state of c shown in Fig. 9 by the slide plate 208 is moved to rotate in the direction of Y by the force of the spring 219 thereby releasing the engagement of the case 2 with the latch 217 and returning the opening mechanism 200 to its original state.

At this time, as shown in a of Fig. 11, because the guiding member 205 engages with the wedge member 206 which is fixed to the front plate 50a so as to be in the condition shown in b of Fig. 11, there is no possibility that the opening mechanism 200 shakes in vertical direction or any problems occur for example in case the reproducing device 50 is dropped in the packed condition.

Because there is less clearance or movements in the device, the record case 1 can be smoothly inserted.

It is also possible to form the opening members and the supporting members into the shape not only limiting thereto of the shell shown in Fig. 9 but also both of the opening member 315 and the supporting member 316 can be made into the form of simple slopes as shown in Fig. 12 for example. Furthermore, it is also possible to compose the opening members for example by providing the movable opening member 322 which moves to rotate centering on the fulcrum 222 and the fixed opening mechanism 320 which functions similarly as the supporting member 216 as shown in Fig. 13.

The above is the description of the embodiments of the opening mechanism according to the present invention, however, the structures and motions of other parts of the reproducing device 50 are quite the same as those of said prior art.

Possibility of utilization for industrial purpose

According to the present invention as described above, the opening mechanism is made possible to move into the inner portion of the device only after the case is expanded to be opened and further the case has advanced up to the predetermined position and the latch secured the case, therefore, there can be no possibility of problems to occur in which the abuse by users in the case of the prior art resulted in separation of the case from the opening mechanism thereby causing the opening mechanism to run by itself. In the reproducing device of a system wherein the disc like recording medium is held in the case, the case is inserted into the reproducing device to place said disc like recording medium on the turntable, the stable loading of the disc like recording medium can be expected.

List of reference codes of the drawings
1. Record case.
2. Body of the record case.
3. Cover.
5. Record holding space.
6. Record.
7. Opening.
8. Plate.
9, 10, 11 Ribs.
12. Window.

13. Hole.
14. Taper.
19. Notch.
20. Guiding groove.
21. Boss.
50. Reproducing device.
51. Opening mechanism.
51a. Moving body.
52. Turntable.
53. Record holding mechanism.
54. Latching mechanism of cover.
55. Record case inserting slot.
56. Guide rail.
57. Upper beam.
58. Lower beam.
59. Opening arm.
61. Roller.
200. Opening mechanism.
201. Rail.
202. Cam plate.
203. Roller.
204, 209, 210 Pin.
205. Guiding member.
206. Wedge member.
207. Base.
208. Slide plate.
211. Roller.
213. Coil spring.
214. Engaging member.
215. Opening member.
216. Supporting member.
217. Latch.
219. Spring.
315. Opening member.
316. Supporting member.
320. Fixed opening member.

**Claims**

1. A recording disc reproducing device for use with a disc case (1) having a flat rectangular box shaped case body (2) with an opening (7) at one end thereof, the interior of the case body (2) being sized for holding a disc-like recording medium (6) and the case body (2) having an engaging hole (12) located near the opening of the case body (2), the disc case (1) further including a cover (3) removably received in the opening (7) of the case body (2), the recording disc reproducing device (50) comprising:

a housing having a front side (50a) with an elongated disc case inserting slot (55) therein through which the disc case (1) is inserted;

holding means (53), disposed at a rear part of the reproducing device, for holding the disc-like recording medium (6) within the reproducing device (50) after a disc case (1) has been inserted into and withdrawn from the reproducing device (50);

turntable means (52), positioned between said inserting slot (55) and a rear part of the reproducing device (50), for rotating the disc-like recording medium (6);

a rail (201) disposed in said housing extending in a longitudinal direction (X) along which a disc-like recording medium (6) is inserted into and removed from the reproducing device (50);

a base (207) slidably supported on said rail (201) from a first position near said inserting slot (55) to a second position along said longitudinal direction towards the rear part of the reproducing device (50);

an opening means (215) disposed on said base for expanding the opening of a disc case (1) which is inserted through said disc case inserting slot (55);

an engaging means (217) disposed on said base (207) for removably engaging with the engaging hole (12) of a disc case (1) which is inserted through said inserting slot (55) to thereby secure the disc case (1) with respect to said base (207);

a slide controlling means (202, 211, 217a) disposed between said base (207) and said rail (201) for either preventing or allowing said base (207) to slide along said rail (201); and

characterised by further comprising a coupling means (208), oPeratively connected to said engaging means (217) and said slide controlling means (202, 211, 217a), for causing said slide controlling means to prevent said base (207) from sliding along said rail (201) except when said engaging means (217) is engaged with the engaging hole (12) of a disc case (1) which has been inserted through said disc case inserting slot (55), and in that the opening means (215) is only operable when the engaging means has engaged a disc case.

2. The recording disc reproducing device of claim 1, wherein said opening means (215) includes at least one plate (215) which is rotatable 90° from an initial position for expanding the opening (7) of a disc case (1) when said base (207) is in said first position to another position, when said base (207) slides along said rail (201) to said second position, for maintaining the opening (7) of a disc case (1) in the expanded condition and allowing the disc-like recording medium (6) to pass out of and into the disc case (1) through the expanded opening (7);

said slide controlling means (202, 211, 217a) includes a cam plate (202) extending along a side of said rail (201);

said coupling means (208) comprises a plate which is slidable on said base (207) in a direction which is perpendicular to the longitudinal direction of said rail (201), said slide controlling means further includes a roller (211) rotatably mounted on said coupling means (208) which travels along an inclined edge (202a) of said cam plate (202) only when said engaging means (217) is engaged with the engaging hole (12) of a disc case (1) inserted through said disc case inserting slot (55).

3. The recording disc reproducing device of claim 2, wherein said engaging means (217) is rotatably mounted on said base (207) and includes a rotatable abutting part (217b) which engages the opening end of a disc case (1) and rotates said engaging means (217) when a disc case (1) is inserted through said disc case inserting slot (55), a rotatable end part (217c) adapted to fit into the engaging hole (12) of a disc case (1), and a rotatable engaging end (217a) which is removably connected to said coupling means (208) to allow said coupling means (208) to move to a position at which said base (207) is free to slide along said rail (201).

## Patentansprüche

1. Ein Aufzeichnungsplattenabspielgerät zur Verwendung mit einem Plattenbehälter (1), der einen flachen rechteckigen kastenförmigen Behälterkörper (2) mit einer öffnung (7) an seinem einen Ende aufweist, wobei das Innere des Behalterkörpers (2) für die Halterung eines plattenartigen Aufzeichnungsmediums (6) vorgesehen ist und der Behälterkörper (2) ein Eingriffsloch (12) aufweist, das nahe der öffnung des Behälterskörpers angeordnet ist, und der Behälterkörper weiterhin eine Abdeckung (3) enthält, die abnehmbar in der öffnung (7) des Behälterkörpers (2) aufgenommen ist, und das Plattenabspielgerät (50) umfaßt:

ein Gehäuse, das eine Frontseite (50a) mit einem länglichen Plattenbehälter-Einführungsschlitz (55) darin aufweist, durch welchen der Plattenbehälter (1) eingeführt wird;

einer Halterungseinrichtung (53), die am hintern Teil des Abspielgerätes angeordnet ist, zum Halten des plattenartigen Aufzeichnungsmediums (6) innerhalb des Abspielgerätes (50), nachdem ein Plattenbehälter (1) in das Abspielgerät (50) eingeführt und aus dem Abspielgerät (50) herausgezogen worden ist;

eine Drehtischeinrichtung (52), die zwischem dem Einfuhrungsschlitz (55) und einem hinteren Teil des Abspielgerätes (50) angeordnet ist, zum Drehen des plattenartigen Aufzeichnungsmediums (6);

eine Schiene (201), die in dem Gehäuse angeordnet ist und sich in einer Längsrichtung (X), entlang welcher ein plattenartiges Aufzeichnungsmedium (6) in das Abspielgerat (50) eingeführt und aus dem Abspielgerät (50) entfernt wird, erstreckt;

einer Basis (207), die auf der Schiene (201) von einer ersten Position nahe dem Einführungsschlitz (55) zu einer zweiten Position entlang der Längsrichtung zum dem hinteren Teil des Abspielgeräts (50) verschiebbar gehalten ist;

einer öffnungseinrichtung (215), die auf der Basis angeordnet ist, zum Ausdehnen der öffnung eines Plattenbehälters (1), welcher durch den Plattenbehälter-Einführungsschlitz (55) eingeführt wird;

eine Eingriffseinrichtung (217), die auf der Basis (207) angeordnet ist, zum lösbaren Eingriff mit dem Eingriffsloch (12) des Plattenbehälters (1), welcher durch den Eingriffsschlitz (55) eingeführt wird, um dadurch den Plattenbehälter (1) in bezug auf die Basis (207) zu befestigen;

einer Verschiebungssteuereinrictung (202, 211, 217a), die zwischen der Basis (207) und der Schiene (201) angeordnet ist, um entweder zu verhindern oder zu ermöglichen, daß die Basis (207) längs der Schiene (201) gleitet;

dadurch gekennzeichnet, daß das Gerät weiterhin eine Kopplungseinrichtung (208) umfaßt, die operativ mit der Eingriffseinrichtung (217) und der Verschiebungssteuereinrichtung (202, 211, 217a) verbunden ist, um zu bewirken, daß die Verschiebungssteuereinrichtung ein Gleiten der Basis (207) längs der Schiene (201) verhindert, ausgenommen, wenn die Eingriffseinrichtung (217) mit dem Eingriffsloch (12) des Plattenbehälters (1), welcher durch den Plattenbehälter-Eingriffsschlitz (55) eingeführt worden ist, im Eingriff steht, und daß die öffnungseinrichtung (215) nur betreibbar ist, wenn die Eingriffseinrichtung mit einem Plattenbehälter in Eingriff gekommen ist.

2. Das Plattenabspielgerät nach Anspruch 1, wobei die öffnungseinrichtung (215) wenigstens eine Platte (215) enthält, welche von einer Anfangsposition zur Ausdehnung der öffnung (7) von einem Plattenbehälter (1), wenn die Basis (207) in ihrer ersten Position ist, um 90° zu einer anderen Position, wenn die Basis (207) längs der Schiene (201) zu der zweiten Position gleitet, drehbar ist, um die öffnung (7) von einem Plattenbehälter (1) in dem ausgedehnten Zustand zu halten und es dem plattenartigen Aufzeichnungsmedium (6) zu ermöglichen, durch die erweiterte öffnung (7) aus dem Plattenbehälter (1) aus- und in den Plattenbehalter (1) einzutreten;

die Verschiebungssteueeinrichtung (202, 211, 217a) eine Nockenplatte (202) enthält, die sich längs einer Seite der Schiene (201) erstreckt; und

die Kopplungsienrichtung (208) eine Platte umfaßt, welche auf der Basis in einer Richtung verschiebbar ist, welche senkrecht zu der Längsrichtung der Schiene (201) verläuft, wobei die Verschiebungssteuereinrichtung weiterhin eine drehbar auf der Kopplungseinrichtung (208) montierte Rolle (211) enthält, welche sich entlang eines geneigten Randes der Nockenplatte (202) nur bewegt, wenn die Eingriffseinrichtung (271) mit dem Eingriffsloch (12) von einem durch den Plattenbehälter-Einführungsschlitz (55) eingeführten Plattenbehälter (1) im Eingriff ist.

3. Die Plattenabspielvorrichtung nach Anspruch 2, wobei die Eingriffseinrichtung (217) drehbar auf der Basis (207) montiert ist und ein drehbares Anschlagteil (217b), welches in das öffnungsende eines Plattenbehälters (1) eingreift und die Eingriffseinrichtung (217) in Rotation versetzt, wenn ein Plattenbehälter (1) durch den Plattenbehälter-Einführungsschlitz (55) eingeführt wird, ein drehbares Endteil (272c), das derart ausgebildet ist, daß es in das Eingriffsloch (12) eines Plattenbehälters (1) hineinpaßt, und ein drehbares Eingriffsende (217a) enthält, welches lösbar mit der Kopplungseinrichtung (208) verbunden ist, um der Kopplungseinrichtung (208) zu ermöglichen, sich zu einer Position zu bewegen, in welcher die Basis (207) frei ist, um längs der Schiene (201) zu gleiten.

## Revendications

1. Appareil de lecture de disque d'enregistrement destiné à être utilisé avec une enveloppe (1) de disque ayant un corps (2) d'enveloppe ayant la forme d'une boîte rectangulaire plate ayant une ouverture (7) à une première extrémité, l'intérieur du corps (2) d'enveloppe ayant des dimensions telles qu'il peut loger un support d'enregistrement (6) analogue à un disque, et le corps (2) d'enveloppe ayant un trou de coopération (12) placé prés de l'ouverture du corps (2), l'enveloppe (1) de disque comprenant en outre un couvercle (3) logé de façon amovible dans l'ouverture (7) du corps (2) d'enveloppe, l'appareil de lecture de disque d'enregistrement (50) comprenant:

un boîtier ayant une face avant (50a) qui a une fente allongée (55) d'introduction d'enveloppe par laquelle l'enveloppe (1) du disque est introduite,

un dispositif (53), placé à la partie arrière de l'appareil de lecture, destiné à maintenir le support d'enregistrement (6) analogue à un disque dans l'appareil de lecture (50) après que l'enveloppe (1) du disque a été introduite dans l'appareil de lecture (50) et extraite de celui-ci,

un dispositif à platine tournante (52) placé entre la fente d'introduction (55) et une partie arrière du disque de lecture (50) afin qu'il fasse tourner le support d'enregistrement (6) en forme de disque,

un rail (201) placé dans le boîtier dans la direction longitudinale (X) et le long duquel un support d'enregistrement (6) en forme de disque est introduit dans l'appareil (50) et est retiré de celui-ci,

une base (207) supportée par le rail (201) afin qu'elle puisse coulisser d'une première position proche de la fente d'introduction (55) à une seconde position, dans la direction longitudinale, tournée vers la partie arrière de l'appareil de lecture (50),

une dispositif d'ouverture (215) placé sur la base et destiné à écarter l'ouverture de l'enveloppe (1) du disque qui est introduite par la fente d'introduction (55),

un dispositif de coopération (217) placé sur la base (207) et destiné à coopèrer temporairement avec le trou de coopération (12) d'une enveloppe (1) de disque qui a été introduite par la fente (55) afin que l'enveloppe (1) soit fixèe par rapport à la base (207),

un dispositif de réglage de coulissement (202, 211, 217a) placé entre la base (207) et le rail (201) et destiné à empécher ou à permettre le coulissement de la base (207) lé long du rail (201), et

caractérisé en ce qu'il comporte en outre un dispositif d'accouplement (208), raccordé au dispositif de coopération (217) et au dispositif de réglage de coulissement (202, 211, 217a) pendant le fonctionnement, de manière qu'il provoque le fonctionnement du dispositif de commande de coulissement d'une manière qui empéche le cou-

lissement de la base (207) le long du rail (201) sauf lorsque le dispositif de coopération (217) est en coopération avec le trou de coopération (12) d'une enveloppe (1) de disque qui a été introduite par la fente d'introduction (55), et en ce que le dispositif d'ouverture (215) ne peut être commandé que lorsque le dispositif de coopération est venu en coopération avec une enveloppe de disque.

2. Appareil de lecture de disque d'enregistrement selon la revendication 1, dans lequel le dispositif d'ouverture (215) comporte au moins une plaque (215) qui peut tourner de 90° par rapport à une position initiale afin qu'elle écarte l'ouverture (7) de l'enveloppe de disque (1) lorsque la base (207) est dans la première position, vers une autre position, lorsque la base (207) coulisse le long du rail (201) vers la seconde position, avec maintien de l'ouverture (7) de l'enveloppe (1) à l'ètat écarté, le support d'enregistrement (6) analogue à un disque pouvant sortir de l'enveloppe (1) et pénétrer dans celle-ci par l'ouverture écartée (7),

le dispositif (202, 211, 217a) de commande de coulissement comporte une plaque de came (202) disposée le long d'un côté du rail (201), et

le dispositif d'accouplement (208) comporte une plaque qui peut coulisser sur la base (207) en direction perpendiculaire à la direction longitudinale du rail (201), le dispositif de commande de coulissement comprenant en outre un rouleau (211) monté sur le dispositif d'accouplement (208) afin qu'il puisse rouler et qu'il se déplace le long d'un bord incliné (202a) de la plaque de came (202) uniquement lorsque le dispositif de coopération (217) est en coopération avec le trou de coopération (12) d'une enveloppe de disque (1) introduite par la fente (55) d'introduction d'enveloppe.

3. Appareil de lecture de disque d'enregistrement selon la revendication 2, dans lequel le dispositif de coopération (217) est monté sur la base (207) afin qu'il puisse tourner et comporte une partie rotative de butée (217b) qui est au contact de l'extrémité d'ouverture de l'enveloppe (1) du disque et qui fait tourner le dispositif de coopération (217) lorsqu'une enveloppe de disque (1) est introduite par la fente (55) d'introduction d'enveloppe, une partie rotative d'extrémité (217c) étant destinée à pénétrer dans le trou de coopération (12) d'une enveloppe de disque (1), et une extrémité rotative (217a) de coopération qui est raccordée temporairement au dispositif d'accouplement (208) afin que ce dispositif d'accouplement (208) puisse se déplacer vers une position dans laquelle la base (207) est libre de coulisser le long du rail (201).

FIG. 1

F I G. 2

EP 0 181 937 B1

FIG. 3

(a)

(b)

(c)

EP 0 181 937 B1

FIG. 4

(a)

(b)

F I G. 5

(a)

(b)

FIG. 5

(c)

(d)

FIG. 6

FIG. 7

FIG. 8

(a)

(b)

(c)

FIG. 9

(a)

(b)

(c)

# FIG. 10

### (a)

### (b)

### (c)

EP 0 181 937 B1

F I G. 11

(a)

(b)

F I G. 12

F I G. 13